# FASCICULE DE BREVET EUROPEEN

(11) **EP 0 729 091 B1**
(45) Date de publication et mention de la délivrance du brevet: **23.05.2001**
(21) Numéro de dépôt: 96400333.9
(22) Date de dépôt: 19.02.1996
(51) Int. Cl.: G06F 9/318

(54) **Procédé et dispositif de commande simultanée des états de contrôle des unités d'exécution d'un processeur programmable**
Verfahren und Einrichtung zur simultanen Steuerung der Steuerzustände von Verarbeitungseinheiten eines programmierbaren Prozessors
Method and apparatus for simultaneously controlling the control states of the execution units of a programmable processor

(30) Priorité: 23.02.1995 FR 9502131
(43) Date de publication de la demande: 28.08.1996
(73) Titulaire: FRANCE TELECOM, 75015 Paris (FR)
(72) Inventeur: Dufal, Frédéric, F-38100 Grenoble (FR); Privat, Gilles, F-38240 Meylan (FR)
(74) Mandataire: Casalonga, Axel

(56) Documents cités:
- EP-A- 0 306 920
- EP-A- 0 314 277
- WO-A-80/01423
- US-A- 3 422 404
- US-A- 4 173 041

## Description

L'invention concerne la commande simultanée des états de contrôle d'une pluralité d'unités d'exécution d'un processeur programmable, à partir d'un code-programme stocké dans une mémoire-programme, de façon à notamment minimiser la taille-mémoire du code-programme.

L'invention s'applique avantageusement mais non limitativement à des architectures matérielles dédiées à la mise en oeuvre de traitements numériques intensifs, relativement réguliers et répétitifs, par exemple en traitement d'images animées, en particulier dans des applications de communication multimédia.

Classiquement les instructions d'un processeur programmable codent les états de contrôle de celui-ci, ces états de contrôle fixant les configurations de fonctionnement du chemin de données.

L'état de contrôle global du processeur varie à chaque cycle du signal d'horloge à partir duquel il est cadencé. Lorsque les instructions du code-programme contenues dans la mémoire-programme sont destinées à contrôler simultanément les états de contrôle de plusieurs ressources matérielles distinctes, communément désignées sous le terme générique d'unités d'exécution, l'état de contrôle varie localement à chaque cycle d'horloge en fonction des différentes unités d'exécution. Ces unités d'exécution peuvent être par exemple des unités arithmétiques et logiques, des multiplieurs, des additionneurs ou encore des moyens d'interconnexion commandables entre les éléments précédemment mentionnés, tels que des multiplexeurs.

Une commande de tous les états de contrôle possibles à partir d'une succession de mots d'instruction constitués chacun par les mots de contrôle destinés à commander respectivement, directement et simultanément les différentes unités d'exécution, serait possible mais conduirait à une taille du code-programme très importante, et par conséquent à l'utilisation d'une mémoire-programme volumineuse.

L'invention a pour but d'apporter une solution à ce problème et de minimiser la taille-mémoire du code-programme à partir duquel sont commandés simultanément les états de contrôle des unités d'exécution, et donc de réduire l'encombrement matériel de la mémoire-programme.

L'invention a également pour but de permettre la commande simultanée et indépendante de toutes les unités d'exécution tout en utilisant pleinement le champ utile des mots de contrôle.

L'invention propose donc un procédé de commande simultanée des états de contrôle d'une pluralité d'unités d'exécution d'un processeur programmable, dans lequel on génère successivement des groupes de mots de contrôle destinés aux différentes unités, à partir d'un code-programme stocké dans une mémoire-programme. Selon une caractéristique générale de l'invention, on stocke une première partie au moins du code-programme dans une première partie de la mémoire-programme, comprenant une succession de mots de programme comportant des premiers mots de base ayant chacun une taille inférieure à la somme des tailles respectives des mots de contrôle, et des deuxièmes mots de base en un nombre inférieur à celui des premiers mots de base. On extrait séquentiellement de cette première partie de la mémoire-programme les différents mots de programme. On prévoit un moyen de stockage dont on met à jour le contenu au moins à partir de chaque deuxième mot de base extrait, et on élabore séquentiellement certains au moins des différents groupes de mots de contrôle, à partir de la combinaison selon au moins une relation logique prédéterminée, des premiers mots de base extraits et du contenu du moyen de stockage. On minimise ainsi la taille-mémoire du code-programme.

En d'autres termes l'invention prévoit notamment de structurer le code-programme en instructions (premiers mots de base) et en directives (deuxièmes mots de base). Chaque instruction est alors valable pour un seul cycle d'horloge tandis que le contenu du moyen de stockage reste valable en général pour une durée plus longue couvrant plusieurs cycles d'horloge, puisqu'il est mis à jour par les directives qui sont en nombre inférieur aux instructions.

Au sens de la présente invention, l'expression "mettre à jour" doit s'interpréter dans un sens très large englobant notamment une substitution d'au moins certains bits du contenu du moyen de stockage par certains bits au moins de la directive considérée, ou encore la modification du contenu du moyen de stockage par une fonction logique définie par la directive, par exemple une inversion de bits.

Chaque mot de contrôle affecté à une unité d'exécution est alors obtenu à partir de la combinaison logique d'une instruction et du contenu du moyen de stockage mis à jour par les directives. Là encore, le terme "combinaison" doit être pris dans un sens très général, comportant une simple juxtaposition de bits et/ou une concaténation de bits et/ou une véritable combinaison selon une fonction logique d'une partie au moins des bits des instructions et directives.

La taille des instructions, et avantageusement de tous les mots de programme du code-programme, qui est inférieure à la somme des tailles élémentaires des mots de contrôle nécéssaires à la commande des unités d'exécution, ainsi qu'un nombre de directives inférieure à celui des instructions, conduisant ainsi à une "mise en facteur temporelle" de ces directives, permettent de compacter la taille-mémoire du code-programme.

Selon une variante de l'invention, chaque premier mot de base du code-programme comprend un bloc de premiers mots d'instruction (ou "instructions") mutuellement indépendants et respectivement affectés à la pluralité d'unités d'exécution, tandis que chaque deuxième mot de base représente un deuxième mot d'instruction (ou "directive") affecté à au moins une unité d'exécution. On subdivise le moyen de stockage en une pluralité de moyens de stockage élémentaires affectés respectivement à la pluralité d'unités d'exécution, et dont les contenus respectifs sont respectivement mis à jour au moins à partir des deuxièmes mots d'instruction correspondants et on élabore séquentiellement, selon une deuxième relation logique affectée spécifiquement à chaque unité d'exécution, certains au moins des mots de contrôle affectés à cette unité d'exécution à partir des premiers mots d'instruction correspondants et du contenu du moyen de stockage élémentaire affecté à cette unité d'exécution.

Ainsi dans cette variante, la première partie de la mémoire-programme contient directement les instructions et directives à partir desquelles seront élaborés certains au moins des groupes de mots de contrôles destinés aux unités d'exécution.

Selon une autre variante de l'invention, on élabore à partir de la combinaison selon une première relation logique prédéterminée, de chaque premier mot de base extrait et du contenu du moyen de stockage, un sous-mot de programme comportant un bloc de premiers mots d'instruction mutuellement indépendants respectivement affectés à la pluralité d'unités d'exécution, et/ou au moins un deuxième mot d'instruction affecté à au moins une unité d'exécution. On prévoit en outre une pluralité de moyens de stockage élémentaires affectés respectivement à la pluralité d'unités d'exécution, et dont les contenus respectifs sont respectivement mis à jour au moins à partir des deuxièmes mots d'instruction correspondants et on élabore séquentiellement, selon une deuxième relation logique affectée spécifiquement à chaque unité d'exécution, certains au moins des mots de contrôle affectés à cette unité d'exécution à partir des premiers mots d'instruction correspondants et du contenu du moyen de stockage élémentaire affecté à cette unité d'exécution.

En d'autres termes on prévoit selon cette variante, une hiérarchie supplémentaire dans la structure du code-programme. Plus précisément, le procédé selon l'invention permet d'extraire de la mémoire-programme des instructions et des directives "d'ordre supérieur" (premiers et deuxièmes mots de base) à partir desquelles on élabore des instructions et des directives "d'ordre inférieur" (premiers et deuxièmes mots d'instruction) qui conduiront elles-mêmes à l'élaboration des différents mots de contrôle.

On peut élaborer simultanément ou séquentiellement les premiers et deuxièmes mots d'instruction.

Dans l'une ou l'autre des variantes, on prévoit avantageusement qu'en présence d'un mot de programme (première variante) ou d'un sous-mot de programme (deuxième variante) différent d'un bloc de premiers mots d'instruction, on élabore les mots de contrôle à partir de la combinaison, selon lesdites deuxièmes relations logiques prédéterminées, d'un premier mot supplémentaire d'instruction de contenu préétabli et des contenus des moyens de stockage élémentaires

En pratique cette instruction proprement dite préétablie est choisie, compte tenu de la relation logique de combinaison, pour conduire après combinaison avec le contenu du ou des moyen de stockage élémentaire à l'obtention d'un ou de plusieurs mots de contrôle spécifiant une absence d'action par la ou les unités d'exécution concernées.

On prévoit également de préférence, dans l'une ou l'autre des variantes, une deuxième partie dans la mémoire-programme, contenant des deuxièmes mots supplémentaires d'instruction (directives supplémentaires préenregistrées par exemple) affectés à au moins une unité d'exécution. En présence d'un mot ou d'un sous-mot de programme différent d'un deuxième mot d'instruction (directive), on extrait éventuellement de la deuxième partie de la mémoire-programme un deuxième mot supplémentaire d'instruction à partir duquel on met à jour le contenu du moyen de stockage élémentaire correspondant.

Un tel mode de mise en oeuvre permet de minimiser les temps morts au niveau de la fourniture d'une directive en général. Par ailleurs, il est particulièrement avantageux de placer dans cette deuxième partie de la mémoire-programme des directives préenregistrées qui sont amenées à intervenir de façon répétitive. On évite alors leur stockage répétitif dans la première partie de la mémoire-programme ce qui contribue encore à optimiser la taille-mémoire du code-programme.

Par ailleurs, il peut également s'avérer particulièrement avantageux de modifier au moins une partie du contenu de l'un au moins des deuxièmes mots d'instruction ou des deuxièmes mots suplémentaires d'instruction extrait de la mémoire-programme avant son utilisation aux fins de mise à jour du contenu d'un ou de plusieurs moyens de stockage élémentaires.

Une telle modification, lorsqu'elle se traduit par une substitution de certains bits des directives par des bits provenant de paramètres extérieurs au processeur, permet de pouvoir aisément paramétrer la commande des états de contrôle des unités d'exécution par des données externes sans prévoir de réalisation complexe de moyens matériels supplémentaires.

Dans la variante de l'invention prévoyant une hiérarchie supplémentaire dans la structure du code-programme, et d'une façon analogue à ce qui a été décrit ci-avant pour les instructions et directives d'ordre inférieur, en présence d'un mot de programme extrait différent d'un premier mot de base, on élabore avantageusement le sous-mot de programme à partir de la combinaison selon ladite relation logique prédéterminée, d'un premier mot supplémentaire de base de contenu préétabli et du contenu du moyen de stockage.

On peut également prévoir dans la mémoire-programme au moins une troisième partie contenant des troisièmes mots de base supplémentaires, et en présence d'un mot de programme extrait de la première partie de la mémoire-programme et différent d'un deuxième mot de base, on extrait éventuellement de la troisième partie de la mémoire-programme un troisième mot de base supplémentaire à partir duquel on met à jour le contenu du moyen de stockage.

On peut également modifier au moins une partie du contenu de l'un au moins des deuxièmes mots de base extrait de la mémoire-programme et on met à jour le contenu du moyen de stockage à partir du deuxième mot de base modifié.

L'invention a également pour objet un dispositif de commande simultanée des états de contrôle d'une pluralité d'unités d'exécution d'un processeur programmable, comprenant une mémoire-programme et des moyens de commande, connectés entre la mémoire-programme et les unités d'exécution, et aptes à générer successivement des groupes de mots de contrôle destinés aux différentes unités à partir d'un code-programme contenu de la mémoire-programme. Selon une caractéristique générale de l'invention la mémoire-programme comprend une première partie contenant une succession de mots de programme comportant des premiers mots de base ayant chacun une taille inférieure à la somme des tailles respectives des mots de contrôle, et des deuxièmes mots de base en un nombre inférieur à celui des premiers mots de base. Les moyens de commande comportent des moyens pour extraire séquentiellement de la première partie de la mémoire-programme les différents mots de programme, un moyen de stockage relié à la sortie de la mémoire-programme, des moyens de mise à jour du contenu du moyen de stockage au moins à partir de chaque deuxième mot de base extrait, et des moyens d'élaboration aptes à élaborer séquentiellement certains au moins des différents groupes de mots de contrôle, à partir de la combinaison selon au moins une relation logique prédéterminée, du contenu du moyen de stockage et d'un premier mot de base extrait, de façon à minimiser la taille-mémoire dudit code-programme.

Selon un mode de réalisation de l'invention, chaque premier mot de base comporte un bloc de premiers mots d'instruction mutuellement indépendants respectivement affectés à la pluralité d'unités d'exécution, tandis que chaque deuxième mot de base représente un deuxième mot d'instruction affecté à au moins l'une des unités d'exécution. Le moyen de stockage comporte une pluralité de moyens de stockage élémentaires, connectés à la sortie de la mémoire-programme, et respectivement affectés aux différentes unités d'exécution tandis que les moyens de mise à jour comportent une pluralité de moyens de mise à jour élémentaires aptes à mettre respectivement à jour les contenus des moyens de stockage élémentaires à partir des deuxièmes mots d'instruction correspondants (désignant ces moyens de stockage). Les moyens d'élaboration comportent une pluralité de moyens d'élaboration élémentaires élaborant chacun séquentiellement les différents mots de contrôle successifs d'une unité d'exécution, à partir de la combinaison selon une deuxième relation logique prédéterminée spécifique de ladite unité, des premiers mots d'instruction correspondants et du contenu du moyen de stockage élémentaire affecté à ladite unité.

Chaque mot de programme comporte de préférence un identifiant permettant de l'identifier en tant que premier mot d'instruction ou en tant que deuxième mot d'instruction, ainsi qu'une partie utile. Les moyens de commande comportent des moyens de sélection, commandés par l'identifiant de chaque mot de programme, et comportant une première entrée pour recevoir les mots de programme, une première sortie connectée aux moyens d'élaboration élémentaires, et une deuxième sortie connectée aux moyens de mise à jour élémentaires.

La mémoire-programme peut également comporter une deuxième partie contenant des deuxièmes mots supplémentaires d'instruction, et les moyens de sélection comportent une autre entrée connectée à la sortie de la deuxième partie de la mémoire-programme.

Selon un autre mode de réalisation de l'invention, les moyens d'élaboration élaborent séquentiellement des sous-mots de programme comportant chacun un bloc de premiers mots d'instruction mutuellement indépendants respectivement affectés à la pluralité d'unités d'exécution, et/ou au moins un deuxième mot d'instruction affecté à au moins une unité d'exécution. Les moyens de commande comportent en outre une pluralité de moyens de stockage élémentaires, connectés à la sortie des moyens d'élaboration, et respectivement affectés aux différentes unités d'exécution, ainsi qu'une pluralité de moyens de mise à jour élémentaires aptes à mettre respectivement à jour les contenus des moyens de stockage élémentaires à partir des deuxièmes mots d'instruction correspondants. Les moyens de commande comportent en outre une pluralité de moyens d'élaboration élémentaires élaborant chacun séquentiellement les différents mots de contrôle successifs d'une unité d'exécution, à partir de la combinaison selon une relation logique prédéterminée spécifique de ladite unité, des premiers mots d'instruction correspondants et du contenu du moyen de stockage élémentaire affecté à ladite unité.

Chaque mot de programme comporte alors de préférence un identifiant permettant de l'identifier en tant que premier mot de base ou en tant que deuxième mot de base, ainsi qu'une partie utile, et les moyens de commande comportent des moyens de sélection amont, commandés par l'identifiant de chaque mot de programme, comportant une première entrée pour recevoir les mots de programme, une première sortie connectée aux moyens d'élaboration, et une deuxième sortie connectée aux moyens de mise à jour.

La mémoire-programme comporte avantageusement une troisième partie contenant des deuxièmes mots supplémentaires de base, et par le fait que les moyens de sélection amont comportent une autre entrée connectée à la sortie de la troisième partie de la mémoire-programme.

Chaque sous-mot de programme comporte avantageusement un identifiant permettant de l'identifier en tant que premier mot d'instruction ou en tant que deuxième mot d'instruction, ainsi qu'une partie utile, et les moyens de commande comportent des moyens de sélection, commandés par l'identifiant de chaque sous-mot de programme, comportant une première entrée pour recevoir sous-mots de programme, une première sortie connectée aux moyens d'élaboration élémentaires, et une deuxième sortie connectée aux moyens de mise à jour élémentaires.

Là encore la mémoire-programme comporte avantageusement une deuxième partie contenant des deuxièmes mots supplémentaires d'instruction, et les moyens de sélection comportent une autre entrée connectée à la sortie de la deuxième partie de la mémoire-programme.

Dans l'un ou l'autre des modes de réalisation, certains au moins des deuxièmes mots d'instruction ou certains au moins des deuxièmes mots supplémentaires d'instruction comportent avantageusement une zone de désignation d'une ou des unités à laquelle ils sont affectés, une zone d'état, et une partie utile. Le moyen de stockage élémentaire correspondant à ladite zone de désignation comporte plusieurs sous-moyens de stockage élémentaires correspondant aux différentes valeurs possibles de la zone d'état, et les moyens de mise à jour élémentaires comportent des sous-moyens de mise à jour aptes à mettre à jour le contenu du sous-moyen de stockage élémentaire désigné par la zone d'état à partir de la partie utile de ce deuxième mot d'instruction ou de ce deuxième mot supplémentaire d'instruction.

Selon un autre mode de réalisation de l'invention, l'un au moins des mots de contrôle de chaque groupe comporte une première partie contenant plusieurs bits issus directement des bits contenus dans un moyen de stockage élémentaire et une deuxième partie dont les bits résultent d'une combinaison du contenu de ce moyen de stockage élémentaire et d'un premier mot d'instruction. L'unité d'exécution contrôlée par ce mot de contrôle comporte des sous-unités d'exécution contrôlées par des sous-mots de contrôle comportant chacun un bit différent de la première partie du mot de contrôle ainsi que les bits de la deuxième partie du mot de contrôle.

On peut ainsi contrôler simultanément et indépendamment plusieurs unités d'exécution à partir d'un seul mot de contrôle élaboré.

D'autres avantages et caractéristiques de l'invention apparaîtront à l'examen de la description détaillée de modes de mise en oeuvre et de réalisation de l'invention, nullement limitatifs, et illustrés sur les dessins annexés sur lesquels :
- la figure 1 illustre schématiquement un premier mode de réalisation d'un dispositif selon l'invention permettant un premier mode de mise en oeuvre du procédé selon l'invention,
- la figure 2 illustre plus en détail le mode de mise en oeuvre et de réalisation de la figure 1,
- la figure 3 illustre plus en détail une variante du mode de mise en oeuvre de la figure 2,
- la figure 4 illustre schématiquement un mode de réalisation d'une substitution de paramètres extérieurs dans une directive,
- la figure 5 illustre schématiquement un mode de réalisation du dispositif selon l'invention plus particulièrement applicable aux machines SIMD ("Single Instruction Multiple Data"), et
- la figure 6 illustre schématiquement un deuxième mode de réalisation et de mise en oeuvre de l'invention.

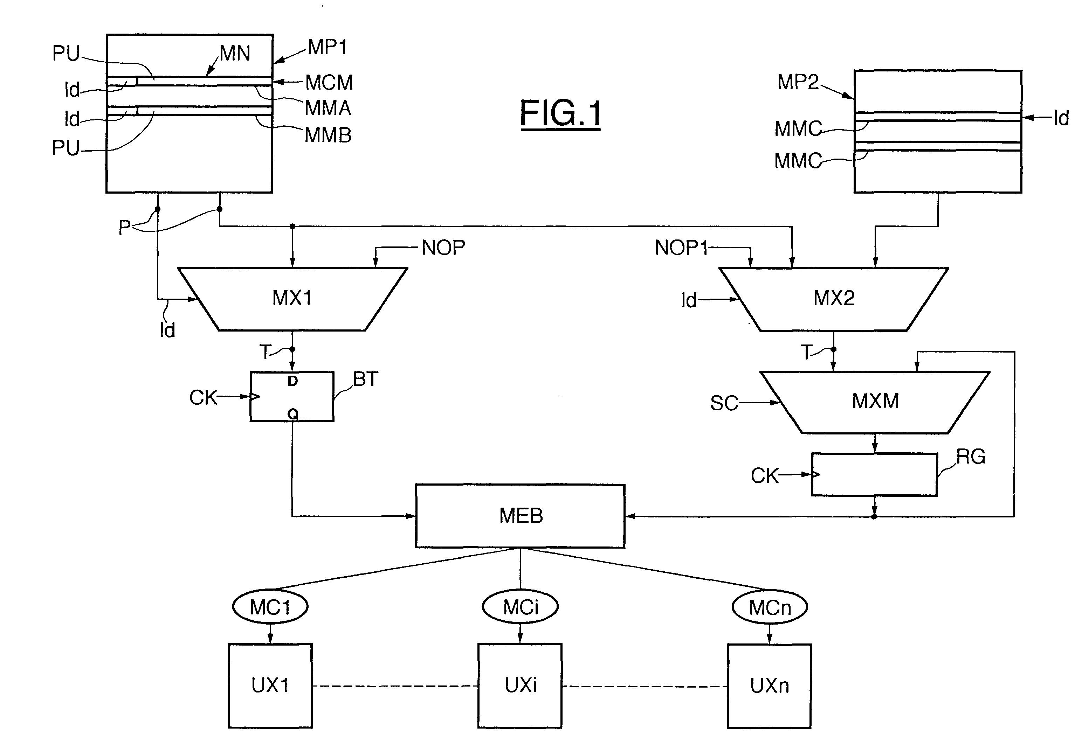

Tel qu'illustré sur la figure 1, le dispositif selon l'invention comporte une mémoire-programme formée d'une mémoire principale MP1 et d'une mémoire annexe MP2. En pratique, ces deux mémoires sont distinctes mais peuvent être deux parties d'une même mémoire physique.

La mémoire MPI comporte une succession de mots de programme MM à partir desquels seront élaborés séquentiellement, au rythme d'un signal d'horloge CK, certains au moins des différents groupes de mots de contrôle MC1-MCn, destinés à fixer les différents états de contrôle des différentes unités d'exécution UX1, UXn du processeur programmable.

Les différents mots de programme sont adressés par des mots de commande MCM (adresse-programme) par exemple issus d'un pointeur d'adresse.

L'invention réside ici plus particulièrement dans l'élaboration des mots de contrôle MCi à partir des mots de programme contenus dans la mémoire-programme, étant entendu que la valeur proprement dite des bits des mots de contrôle, définissant de façon explicite les états de contrôle d'un processeur programmé d'une façon spécifique pour une application spécifique, dépendent des valeurs des bits des différents mots de programme, définies par l'utilisateur lors de la programmation effective du processeur pour ladite application spécifique.

Cette élaboration particulière des mots de contrôle permet d'optimiser la longueur du code-programme contenu dans la mémoire-programme, et donc la taille de cette mémoire-programme.

En effet, si l'on suppose par exemple, à des fins de simplification, que chaque mot de contrôle doit être codé sur b bits pour définir l'état de contrôle correspondant d'une unité d'exécution, et si l'on adaptait une structure du code programme prévoyant que chaque mot de programme MM comporte de façon juxtaposée les n mots de contrôle MCi, chaque mot de programme aurait une longueur de n.b bits.

Dans ce mode de réalisation, chaque mot de programme MM a une taille inférieure à n.b bits ce qui conduit déjà à une réduction de la taille de la mémoire-programme.

Chaque mot de programme MM peut être soit un premier mot de base MMA ou un deuxième mot de base MMB, dont on explicitera la signification ci-après. En pratique, chaque mot de programme MM comporte un identifiant Id, codé sur un ou plusieurs bits, et permettant d'identifier le mot de programme en tant que premier mot de base ou en tant que deuxième mot de base, ainsi qu'une partie utile PU comportant notamment un champ de paramètres dont la valeur sera définie par l'utilisateur lors de la programmation du processeur.

D'une façon très générale, chaque premier mot de base MMA représente une instruction tandis que chaque deuxième mot de base MMB représente une directive. Une directive va être utilisée pour mettre à jour le contenu d'un moyen de stockage tel qu'un registre RG, par l'intermédiaire de moyens de mise à jour formés dans l'exemple décrit ici par un multiplexeur MXM dont une entrée est connectée à la sortie du registre RG. Ainsi, dans cet exemple, la notion de "mise à jour" s'analyse comme un stockage de certains au moins des bits d'une directive, dans le registre RG d'une façon à modifier ainsi son contenu.

Les différents mots de contrôle MCi vont alors être d'une façon générale élaborés à partir des instructions délivrées par la mémoire MP1 et à partir du contenu du registre RG. Cette élaboration s'effectue par des moyens logiques d'élaboration MEB mettant en oeuvre une relation logique prédéterminée réalisée par exemple par synthèse logique.

De façon à diriger une directive vers le registre RG et une instruction vers l'entrée correspondante des moyens d'élaboration MEB, il est prévu d'une façon générale, des moyens de sélection commandés à partir de l'identifiant Id de chaque mot de programme MM. Ces moyens de sélection sont représentés ici par deux multiplexeurs MX1 et MX2 dont l'une des entrées respective est par exemple câblée directement à la mémoire MP1 de façon à recevoir la partie utile du mot de programme. Par ailleurs, la zone d'identifiant de chaque mot de programme est câblée directement, éventuellement par l'intermédiaire d'un décodeur, à l'entrée de commande de ces multiplexeurs MX1 et MX2. Ainsi, lorsqu'un mot de programme MM est extrait de la mémoire MP1 à chaque cycle d'horloge, par l'intermédiaire d'un pointeur d'adresse, la partie utile de ce mot de programme est, en fonction de l'identifiant, soit utilisée pour mettre à jour le moyen de stockage RG, s'il s'agit d'une directive, soit directement envoyée, par l'intermédiaire d'une barrière temporelle BT formée ici des bascules D (en fait autant de bascules D que de bits dans le mot retardé), aux moyens d'élaboration MEB.

En présence d'un mot de programme extrait différent d'une instruction, on prévoit alors la délivrance, aux moyens d'élaboration, MEB d'une instruction supplémentaire préétablie NOP à partir de laquelle vont être élaborés, en combinaison avec le contenu du registre RG, les différents mots de contrôle MCi. En pratique, cette instruction NOP, dont les valeurs des bits sont figées de façon matérielle, par exemple par connexion à la masse ou à l'alimentation, est choisie de façon que la combinaison de cette instruction NOP avec le contenu du registre RG, par les moyens d'élaboration, conduise à l'élaboration de mots de contrôle prédéterminés et spécifiant une absence d'action pour la ou les unités d'exécution concernées.

De même, en présence d'un mot de programme extrait et différent d'une directive, il est prévu dans ce mode de réalisation, de façon câblée par exemple, la délivrance en entrée du multiplexeur MX2 d'une directive prédéterminée NOP1 se traduisant par une non mise à jour du registre RG.

La mémoire MP2 contient quant à elle des deuxièmes mots de base supplémentaires MMC, représentatifs par exemple de directives préenregistrées. En pratique, il n'est pas nécessaire de prévoir un identifiant pour ces mots MMC puisqu'il s'agit uniquement de directives. La longueur de ces mots est donc inférieure à la longueur des mots de programme MM contenus dans la mémoire MP1. La sortie de cette mémoire MP2 est connectée au multiplexeur MX2.

Il est ainsi possible, en présence d'un mot de programme MM extrait de la mémoire MP1, et différent d'une directive, de délivrer tout de même éventuellement une directive préenregistrée MMC de façon à mettre à jour le registre RG. L'adressage de cette mémoire MP2 peut s'effectuer à partir de l'identifiant d'un mot de programme extrait de la mémoire MP1.

La délivrance de ces directives préenregistrées MMC n'est pas effectuée systématiquement lors de l'extraction d'une instruction MMA de la mémoire MP1, mais l'est seulement pour certaines de ces instructions MMA. Cette différentiation s'effectue par exemple au moyen de l'identifiant Id. Ainsi, si l'on suppose que l'identifiant est codé sur au moins 2 bits, et que l'on affecte la valeur 0 à une directive et la valeur 1 ou une valeur supérieure ou égale à 2 à une instruction, on peut par exemple décider que la délivrance des directives préenregistrées en vue de mettre à jour le registre RG ne se fera que simultanément à l'extraction d'instructions dont l'identifiant a une valeur supérieure ou égale à 2.

Lorsqu'une instruction dont l'identifiant est égal à la valeur 1, est extraite de la mémoire MP1, le signal de commande SC du multiplexeur MXM configure celui-ci sur son entrée reliée à la sortie du registre RG, de façon à maintenir inchangé le contenu du registre RG, donc en d'autres termes, à ne pas mettre à jour ce dernier.

Il convient de noter ici que la barrière temporelle BT n'est indispensable dans le dispositif selon l'invention, que lorsque ce dernier comporte effectivement une mémoire annexe MP2.

L'homme du métier aura compris que puisque les directives MMB sont en nombre inférieur à celui des instructions MMA, le contenu du registre RG peut rester inchangé pendant plusieurs cycles d'horloge. En fait, on réalise ainsi une mise en facteur temporelle des directives dans la mémoire-programme, celles-ci définissant alors des états rémanents pour les différentes unités d'exécution, valables pendant plusieurs cycles d'horloge. Ceci contribue encore à réduire la longueur du code programme contenu dans la mémoire-programme, car, dans un cas classique, il aurait été nécessaire de répéter plusieurs fois l'information apportée par ces - directives dans la mémoire-programme.

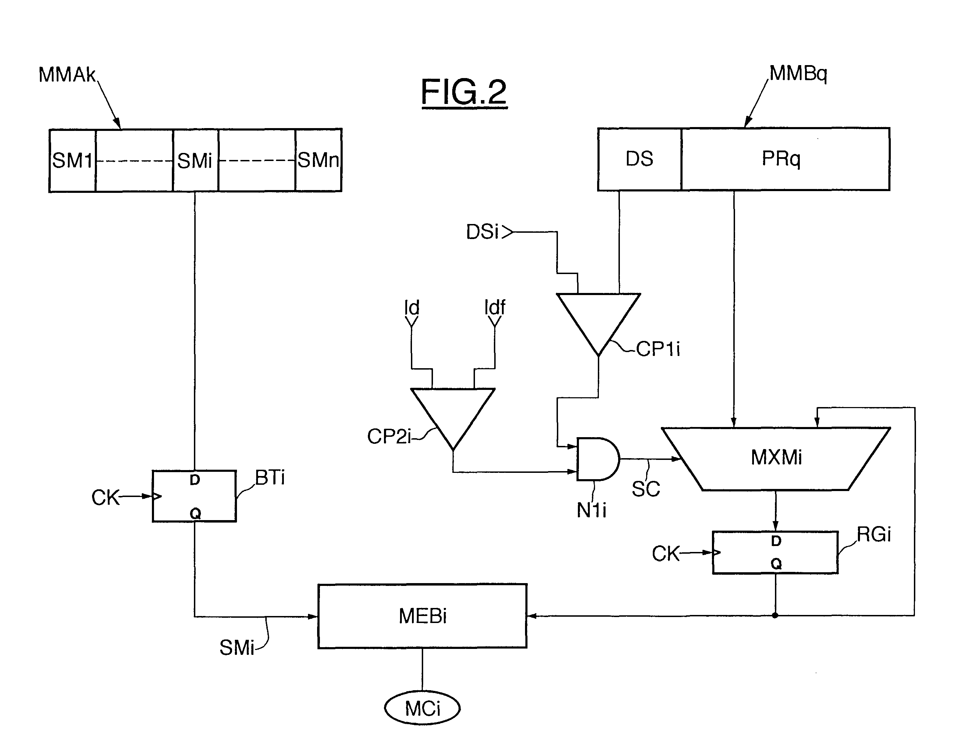

Sur la figure 2, la partie utile PU de chaque premier mot de base MMAk est partitionnée en une pluralité de premiers mots d'instruction (instruction) SM1-SMn affectés respectivement aux différentes unités d'exécution UX1-UXn.

De même, la partie utile PU de chaque deuxième mot de base, ou de chaque deuxième mot de base supplémentaire, MMBq est un deuxième mot d'instruction (directive, ou directive préenregistrée), comportant une zone de désignation DS désignant effectivement l'une au moins des unités d'exécution à laquelle cette directive est affectée, ainsi qu'un champ de paramètres PRq. A chaque unité d'exécution UXi est alors affecté un moyen d'élaboration élémentaire MEBi mettant en oeuvre une combinaison logique spécifique à cette unité d'exécution. Bien entendu plusieurs de ces moyens MEBi peuvent être identiques.

De même, à chaque unité d'exécution UXi est affecté un moyen de stockage élémentaire RGi connecté à des moyens de mise à jour élémentaire MXMi formés ici d'un multiplexeur.

Chaque premier mot d'instruction SMi est directement relié, éventuellement par l'intermédiaire d'une bascule BTi, à l'entrée correspondante du moyen MEBi, par exemple par câblage. Le champ de paramètres PRq de chaque directive extraite est connecté directement, également par câblage, à l'une des entrées de chaque multiplexeur MXMi affecté à chaque registre RGi.

Par ailleurs, le signal de commande SC de chaque multiplexeur MXMi est issu par exemple d'une porte logique ET référencée N1i dont l'une des entrées est reliée à la sortie d'un comparateur CPli comparant la valeur de la zone de désignation DS avec la valeur DSi spécifiquement associée au registre RGi. L'autre entrée de la porte ET est connectée à la sortie d'un autre comparateur CP2i comparant la valeur de l'identifiant du mot de programme extrait de la mémoire MP1 avec un identifiant prédéfini Idf correspondant à la directive NOP1.

Si la zone de désignation DS de la directive de MMBq correspond à DSi et si cette directive MMBq n'est pas en fait une directive NOP1, le champ de paramètres PRq est stocké dans le registre élémentaire RGi.

Si par contre la zone DS ne correspond pas à DSi le multiplexeur MXMi est commuté sur son autre entrée de façon à réécrire dans le registre RGi la valeur précédente. Le champ de paramètres PRq sera alors délivré au registre élémentaire correspondant à l'unité d'exécution dont la valeur DS correspond à celle contenue dans la directive.

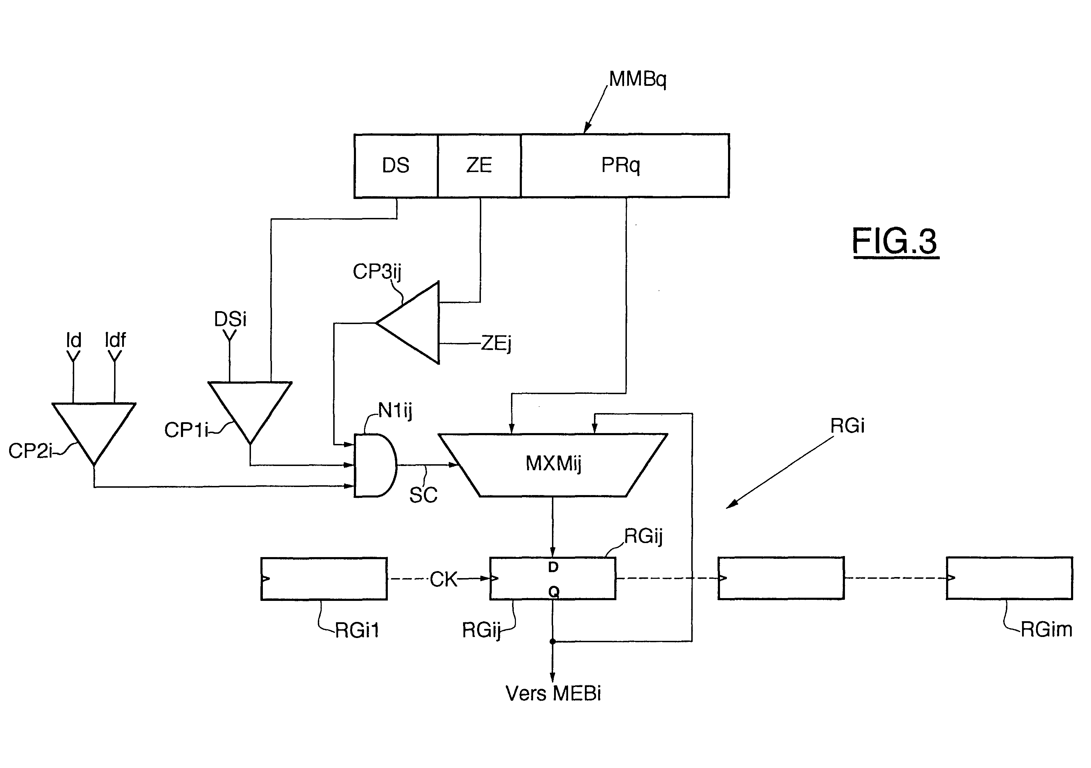

En variante, comme illustré sur la figure 3, certains au moins des registres élémentaires RGi peuvent être décomposés en plusieurs sous-registres élémentaires RGi1-RGim. Le multiplexeur MXMi se décompose alors en une pluralité de sous-multiplexeurs MXMij respectivement affectés à chacun des sous-registres élémentaires. La partie utile d'une directive, ou d'une directive préenregistrée, MMBq comporte alors outre la zone de désignation DS et le champ de paramètres PRq une zone d'état ou de sous-désignation ZE qui va être comparée, dans un comparateur, CP3ij à la valeur ZEj affectée au sous-registre élémentaire RGij. Si la valeur ZE correspond à la valeur ZEj, le champ de paramètres PRq est stocké dans le sous-registre élémentaire RGij. Si par contre cette valeur est différente de ZEj, le champ de paramètres, qui est câblé également à tous les autres sous-registres élémentaires, sera stocké dans le sous-registre dont la valeur d'état correspond à celle de la directive.

Une telle variante de réalisation, qui conduit à une mise à jour partielle de certains des moyens de stockage élémentaires, permet de prévoir des registres de très grande longueur, et en tout cas de longueur supérieure à la longueur des directives. Le contenu d'un tel registre élémentaire pourra alors être complètement mis à jour en plusieurs fois.

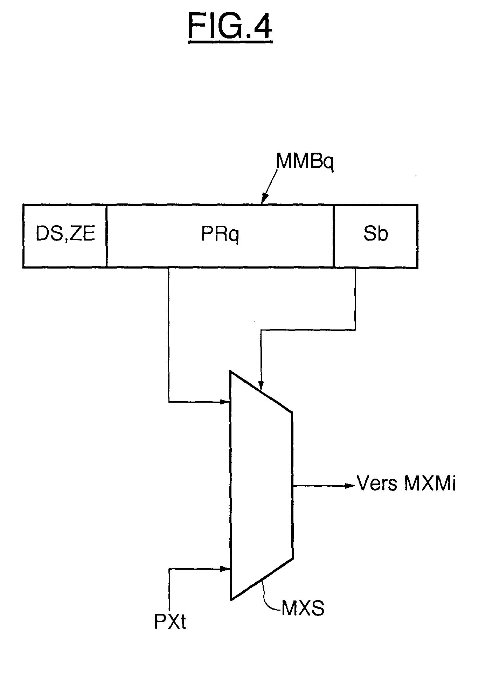

Dans la variante de mise en oeuvre illustrée sur la figure 4, on prévoit que la partie utile d'une directive comporte, outre une zone de désignation, une zone d'état et le champ de paramètres Rq, un champ de substitution Sb. Ce champ de substitution Sb va alors commander un multiplexeur de substitution MXS de façon à substituer certains au moins des bits du champ de paramètres PRq par des bits extérieurs PXt provenant par exemple du résultat d'une opération effectuée par une unité d'exécution. La sortie de ce multiplexeur MXS est alors connectée aux différents multiplexeurs MXMi de façon à mettre à jour le sous-registre élémentaire désigné par la zone DS et la zone d'état ZE de la directive MMBq.

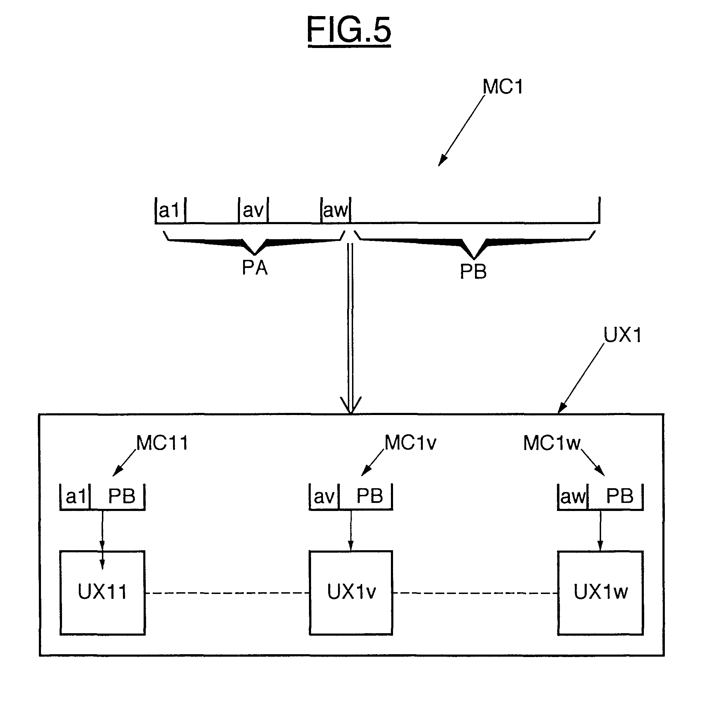

Dans la variante de réalisation illustrée sur la figure 5, l'une des unités d'exécution, par exemple l'unité UX1 se compose en fait de plusieurs sous-unités d'exécution indépendantes UX11-UX1w.

Les moyens logiques d'élaboration MEB1 affectés à l'unité UX1, élaborent alors un mot de commande MC1 comportant une première partie PA composée de bits al-aw, tous différents, et une deuxième partie PB. Les bits de la partie PA sont directement isssus du contenu du registre élémentaire RG1 tandis que les bits de la partie PB peuvent éventuellement faire l'objet d'une combinaison logique entre les bits du contenu du registre RG1 et l'instruction correspondante.

Le câblage entre la sortie des moyens MEB1 et les entrées de commande des différentes sous-unités UX11-UX1w est tel que chaque sous-unité UX1v est commandée par un mot de contrôle MC1v dont l'un des bits est égal à l'un des bits de la partie PA du mot MC1 et dont le reste des bits est formé par des bits de la partie PB. Les différents mots de contrôle MC11-MC1W se distinguent ainsi mutuellement par les bits al-aw.

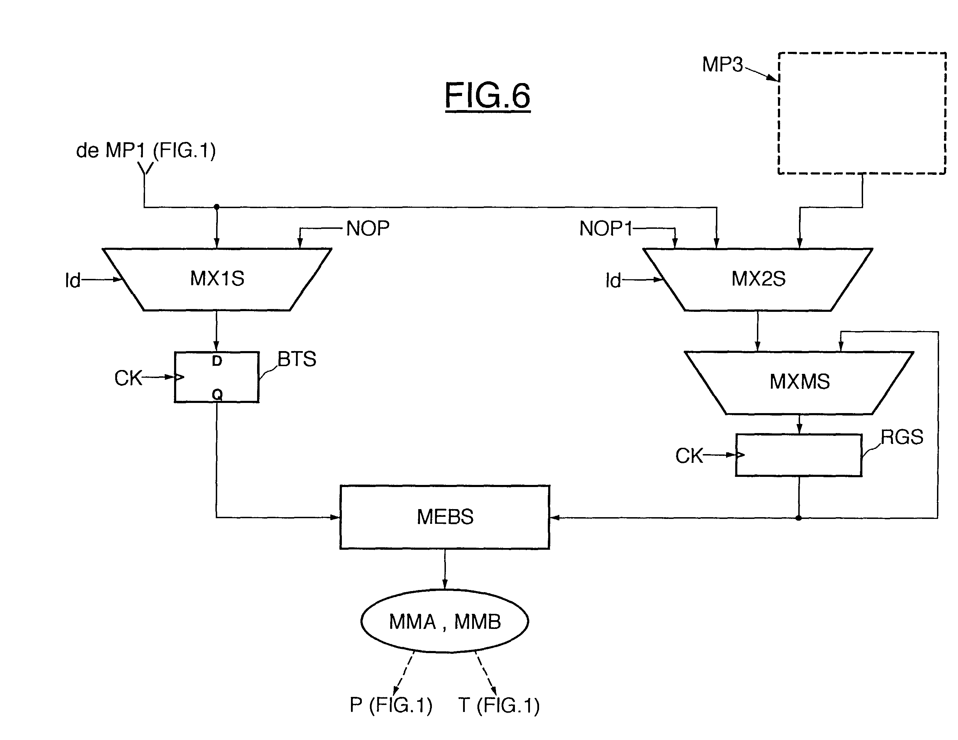

La figure 6 illustre une variante de réalisation et de mise en oeuvre de l'invention prévoyant un degré supérieur de hiérarchie dans la structure du code programme.

En fait, les moyens de commande comportent, outre les moyens d'élaboration élémentaires, les registres de stockage élémentaires et les moyens de mise à jour élémentaires qui viennent d'être décrits, des moyens de sélection amont MX1S et MX2S respectivement reliés à des moyens d'élaboration amont MEBS par l'intermédiaire d'une barrière temporelle BTS et d'un registre de stockage amont RGS associé à un multiplexeur MXMS de mise à jour.

Dans cette variante de réalisation, les premiers mots de base contenus dans la mémoire MP1 représentent en fait des instructions d'ordre supérieur tandis que les deuxièmes mots de base représentent des directives d'ordre supérieur. D'une façon analogue à ce qui a été expliqué ci-avant, chaque directive d'ordre supérieur va mettre à jour le registre RGS et les moyens d'élaboration MEBS vont élaborer, selon une autre relation logique prédéterminée, des sous-mots de programme contenant un bloc de premiers mots d'instruction (instructions) et/ou un deuxième mot d'instruction (directive) qui vont être utilisés dans les moyens décrits en référence aux figures précédentes pour élaborer les différents mots de contrôle.

Chaque sous-mot de programme peut être constitué séquentiellement soit par une directive soit par une instruction. Dans ce cas, la sortie des moyens d'élaboration MEBS se connecte aux points P de la figure 1.

On peut également envisager que chaque sous-mot de programme, contienne simultanément une instruction et une directive. Dans ce cas, la sortie des moyens d'élaboration MEBS peut se connecter aux points T de la figure 1.

En outre, dans le cas d'une connexion aux points P, il peut être également prévu une troisième mémoire annexe MP3 contenant des directives d'ordre supérieur préenregistrées.

## Revendications

1. Procédé de commande simultanée des états de contrôle d'une pluralité d'unités d'exécution d'un processeur programmable, dans lequel on génère successivement des groupes de mots de contrôle (MCi) destinés aux différentes unité (UXi), à partir d'un code-programme stocké dans une mémoire-programme (MP1, MP2), caractérisé par le fait qu'on stocke une première partie au moins du code-programme dans une première partie (MP1) de la mémoire-programme, comprenant une succession de mots de programme (MM) comportant des premiers mots de base (MMA) ayant chacun une taille inférieure à la somme des tailles respectives des mots de contrôle (MCi), et des deuxièmes mots de base (MMB) en un nombre inférieur à celui des premiers mots de base, par le fait qu'on extrait séquentiellement de cette première partie de la mémoire-programme les différents mots de programme, on prévoit un moyen de stockage 5G) dont on met à jour le contenu au moins à partir de chaque deuxième mot de base extrait, et on élabore (MEB) séquentiellement certains au moins des différents groupes de mots de contrôle, à partir de la combinaison selon au moins une relation logique prédéterminée, des premiers mots de base extraits et du contenu du moyen de stockage (RG).

2. Procédé selon la revendication 1, caractérisé par le fait que chaque premier mot de base (MMA) du code-programme comprend un bloc de premiers mots d'instruction (SMi) mutuellement indépendants et respectivement affectés à la pluralité d'unités d'exécution, tandis que chaque deuxième mot de base (MMB) représente un deuxième mot d'instruction affecté à au moins une unité d'exécution, par le fait qu'on subdivise le moyen de stockage en une pluralité de moyens de stockage élémentaires (RGi) affectés respectivement à la pluralité d'unités d'exécution, et dont les contenus respectifs sont respectivement mis à jour au moins à partir des deuxièmes mots d'instruction correspondants et par le fait qu'on élabore séquentiellement (MEBi), selon une deuxième relation logique affectée spécifiquement à chaque unité d'exécution, certains au moins des mots de contrôle affectés à cette unité d'exécution à partir des premiers mots d'instruction correspondants et du contenu du moyen de stockage élémentaire (RGi) affecté à cette unité d'exécution (UXi).

3. Procédé selon la revendication 2, caractérisé par le fait qu'en présence d'un mot de programme différent d'un bloc de premiers mots d'instruction, on élabore les mots de contrôle à partir de la combinaison, selon lesdites deuxièmes relations logiques prédéterminées, d'un premier mot supplémentaire d'instruction (NOP) de contenu préétabli et des contenus des moyens de stockage élémentaires.

4. Procédé selon l'une des revendications 2 ou 3, caractérisé par le fait qu'on prévoit dans la mémoire-programme une deuxième partie (MP2) contenant des deuxièmes mots supplémentaires d'instruction affectés à au moins une unité d'exécution, et par le fait qu'en présence de certains au moins des mots de programme différents d'un deuxième mot d'instruction, on extrait de la deuxième partie de la mémoire-programme un deuxième mot supplémentaire d'instruction à partir duquel on met à jour le contenu du moyen de stockage élémentaire correspondant.

5. Procédé selon la revendication 1, caractérisé par le fait qu'on élabore à partir de la combinaison selon une première relation logique prédéterminée, de chaque premier mot de base extrait ou d'un premier mot de base supplémentaire préétabli, et du contenu du moyen de stockage, un sous-mot de programme (MMA, MMB) comportant un bloc de premiers mots d'instruction mutuellement indépendants respectivement affectés à la pluralité d'unités d'exécution, et/ou au moins un deuxième mot d'instruction affecté à au moins une unité d'exécution, par le fait qu'on prévoit en outre une pluralité de moyens de stockage élémentaires (RGi) affectés respectivement à la pluralité d'unités d'exécution, et dont les contenus respectifs sont respectivement mis à jour au moins à partir des deuxièmes mots d'instruction correspondants et par le fait qu'on élabore séquentiellement, selon une deuxième relation logique affectée spécifiquement à chaque unité d'exécution, certains au moins des mots de contrôle affectés à cette unité d'exécution à partir des premiers mots d'instruction correspondants et du contenu du moyen de stockage élémentaire affecté à cette unité d'exécution.

6. Procédé selon la revendication 5, caractérisé par le fait qu'on élabore séquentiellement les premiers et deuxièmes mots d'instruction.

7. Procédé selon la revendication 5 ou 6, caractérisé par le fait qu'en présence d'un mot de programme extrait différent d'un premier mot de base, on élabore le sous-mot de programme à partir de la combinaison selon ladite relation logique prédéterminée, d'un premier mot supplémentaire de base de contenu préétabli et du contenu du moyen de stockage.

8. Procédé selon l'une des revendications 5 à 7, caractérisé par le fait qu'on prévoit dans la mémoire-programme au moins une troisième partie (MP3) contenant des troisièmes mots de base supplémentaires, et par le fait qu'en présence d'un mot de programme extrait de la première partie de la mémoire-programme et différent d'un deuxième mot de base, on extrait éventuellement de la troisième partie de la mémoire-programme un troisième mot de base supplémentaire à partir duquel on met à jour le contenu du moyen de stockage.

9. Procédé selon l'une des revendications 5 à 8, caractérisé par le fait qu'on modifie au moins une partie du contenu de l'un au moins des deuxièmes mots de base extrait de la mémoire-programme et on met à jour le contenu du moyen de stockage à partir du deuxième mot de base modifié.

10. Procédé selon l'une des revendications 5 à 9, caractérisé par le fait qu'en présence d'un sous-mot de programme différent d'un bloc de premiers mots d'instruction, on élabore les mots de contrôle à partir de la combinaison, selon lesdites deuxièmes relations logiques prédéterminées, d'un premier mot supplémentaire d'instruction de contenu préétabli et des contenus des moyens de stockage élémentaires.

11. Procédé selon l'une des revendications 5 à 10, caractérisé par le fait qu'on prévoit dans la mémoire-programme une deuxième partie (MP2) contenant des deuxièmes mots supplémentaires d'instruction affectés à au moins une unité d'exécution, et par le fait qu'en présence d'un sous-mot de programme différent d'un deuxième mot d'instruction, on extrait, éventuellement de la deuxième partie de la mémoire-programme un deuxième mot supplémentaire d'instruction à partir duquel on met à jour le contenu du moyen de stockage élémentaire correspondant.

12. Procédé selon l'une des revendications 2 à 11, caractérisé par le fait qu'on modifie au moins une partie du contenu de l'un au moins des deuxièmes mots d'instruction ou de l'un au moins des deuxièmes mots supplémentaires d'instruction avant de mettre à jour le contenu du ou des moyens de stockage élémentaires correspondants.

13. Dispositif de commande simultanée des états de contrôle d'une pluralité d'unités d'exécution d'un processeur programmable, comprenant une mémoire-programme et des moyens de commande, connectés entre la mémoire-programme et les unités d'exécution, et aptes à générer successivement des groupes de mots de contrôle destinés aux différentes unités à partir d'un code-programme contenu de la mémoire-programme, caractérisé par le fait que la mémoire-programme comprend une première partie (MP1) contenant une succession de mots de programme comportant des premiers mots de base (MMA) ayant chacun une taille inférieure à la somme des tailles respectives des mots de contrôle, et des deuxièmes mots de base (MMB) en un nombre inférieur à celui des premiers mots de base, par le fait que les moyens de commande comporte des moyens pour extraire séquentiellement de la première partie de la mémoire-programme les différents mots de programme, un moyen de stockage (RG) relié à la sortie de la mémoire-programme, des moyens (MXM) de mise à jour du contenu du moyen de stockage au moins à partir de chaque deuxième mot de base extrait, et des moyens d'élaboration (MEB) aptes à élaborer séquentiellement certains au moins des différents groupes de mots de contrôle, à partir de la combinaison selon au moins une relation logique prédéterminée, du contenu du moyen de stockage et d'un premier mot de base extrait.

14. Dispositif selon la revendication 13, caractérisé par le fait que chaque premier mot de base comporte un bloc de premiers mots d'instruction mutuellement indépendants respectivement affectés à la pluralité d'unités d'exécution, tandis que chaque deuxième mot de base représente un deuxième mot d'instruction affecté à au moins l'une des unités d'exécution, par le fait que le moyen de stockage comporte une pluralité de moyens de stockage élémentaires (RGi), connectés à la sortie de la mémoire-programme, et respectivement affectés aux différentes unités d'exécution tandis que les moyens de mise à jour comportent une pluralité de moyens de mise à jour élémentaires (MXMi) aptes à mettre respectivement à jour les contenus des moyens de stockage élémentaires à partir des deuxièmes mots d'instruction correspondants, et par le fait que les moyens d'élaboration comportent une pluralité de moyens d'élaboration élémentaires (MEBi) élaborant chacun séquentiellement les différents mots de contrôle successifs d'une unité d'exécution, à partir de la combinaison selon une deuxième relation logique prédéterminée spécifique de ladite unité, des premiers mots d'instruction correspondants et du contenu du moyen de stockage élémentaire affecté à ladite unité.

15. Dispositif selon la revendication 14, caractérisé par le fait que chaque mot de programme comporte un identifiant (Id) permettant de l'identifier en tant que premier mot d'instruction ou en tant que deuxième mot d'instruction, ainsi qu'une partie utile, et par le fait que les moyens de commande comportent des moyens de sélection (MX1, MX2), commandés par l'identifiant de chaque mot de programme, et comportant une première entrée pour recevoir les mots de programme, une première sortie connectée aux moyens d'élaboration élémentaires, et une deuxième sortie connectée aux moyens de mise à jour élémentaires.

16. Dispositif selon la revendication 15, caractérisé par le fait que la mémoire-programme comporte une deuxième partie (MP2) contenant des deuxièmes mots supplémentaires d'instruction, et par le fait que les moyens de sélection (MX2) comportent une autre entrée connectée à la sortie de la deuxième partie de la mémoire-programme.

17. Dispositif selon la revendication 13, caractérisé par le fait que les moyens d'élaboration élaborent séquentiellement des sous-mots de programme comportant chacun un bloc de premiers mots d'instruction mutuellement indépendants respectivement affectés à la pluralité d'unités d'exécution, et/ou au moins un deuxième mot d'instruction affecté à au moins une unité d'exécution, et par le fait que les moyens de commande comportent en outre une pluralité de moyens de stockage élémentaires (RGi), connectés à la sortie des moyens d'élaboration, et respectivement affectés aux différentes unités d'exécution, ainsi qu'une pluralité de moyens de mise à jour élémentaires aptes à mettre respectivement à jour les contenus des moyens de stockage élémentaires à partir des deuxièmes mots d'instruction correspondants, et par le fait que les moyens de commande comportent en outre une pluralité de moyens d'élaboration élémentaires élaborant chacun séquentiellement les différents mots de contrôle successifs d'une unité d'exécution, à partir de la combinaison selon une relation logique prédéterminée spécifique de ladite unité, des premiers mots d'instruction correspondants et du contenu du moyen de stockage élémentaire affecté à ladite unité.

18. Dispositif selon la revendication 17, caractérisé par le fait que chaque mot de programme comporte un identifiant (Id) permettant de l'identifier en tant que premier mot de base ou en tant que deuxième mot de base, ainsi qu'une partie utile, et par le fait que les moyens de commande comportent des moyens de sélection amont (MX1S, MX2S) commandés par l'identifiant de chaque mot de programme, comportant une première entrée pour recevoir les mots de programme et comportant une première sortie connectée aux moyens d'élaboration, et une deuxième sortie connectée aux moyens de mise à jour.

19. Dispositif selon la revendication 18, caractérisé par le fait que la mémoire-programme comporte une troisième partie (MP3) contenant des deuxièmes mots supplémentaires de base, et par le fait que les moyens de sélection amont comportent une autre entrée connectée à la sortie de la troisième partie de la mémoire-programme.

20. Dispositif selon l'une des revendications 17 à 19, caractérisé par le fait que chaque sous-mot de programme comporte un identifiant permettant de l'identifier en tant que premier mot d'instruction ou en tant que deuxième mot d'instruction, ainsi qu'une partie utile, et par le fait que les moyens de commande comportent des moyens de sélection, commandés par l'identifiant de chaque sous-mot de programme, comportant une première entrée pour recevoir sous-mots de programme, une première sortie connectée aux moyens d'élaboration élémentaires, et une deuxième sortie connectée aux moyens de mise à jour élémentaires.

21. Dispositif selon la revendication 20, caractérisé par le fait que la mémoire-programme comporte une deuxième partie contenant des deuxièmes mots supplémentaires d'instruction, et par le fait que les moyens de sélection comportent une autre entrée connectée à la sortie de la deuxième partie de la mémoire-programme.

22. Dispositif selon l'une des revendications 14 à 21, caractérisé par le fait que certains deuxièmes mots d'instruction ou certains deuxièmes mots supplémentaires d'instruction comportent une zone de désignation (DS) d'une ou des unités à laquelle ils sont affectés, une zone d'état (ZE), et une partie utile (PU), par le fait que le moyen de stockage élémentaire correspondant à ladite zone de désignation comporte plusieurs sous-moyens de stockage élémentaires correspondant aux différentes valeurs possibles de la zone d'état, et par le fait que les moyens de mise à jour élémentaires comportent des sous-moyens de mise à jour (MXMij) aptes à mettre à jour le contenu du sous-moyen de stockage élémentaire désigné par la zone d'état à partir de la partie utile de ce deuxième mot d'instruction ou de ce deuxième mot supplémentaire d'instruction.

23. Dispositif selon l'une des revendications 14 à 22, caractérisé par le fait que l'un au moins (MC1) des mots de contrôle de chaque groupe comporte une première partie (PA) contenant plusieurs bits issus directement des bits contenus dans un moyen de stockage élémentaire et une deuxième partie (PB) dont les bits résultent d'une combinaison du contenu de ce moyen de stockage élémentaire et d'un premier mot d'instruction, par le fait que l'unité d'exécution contrôlée par ce mot de contrôle comporte des sous-unités (UX11-UX1w) d'exécution contrôlées par des sous-mots de contrôle comportant chacun un bit différent al-aw de la première partie (PB) du mot de contrôle ainsi que les bits de la deuxième partie du mot de contrôle.

## Claims

1. Process for the simultaneous command of the control statuses of a plurality of execution units of a programmable processor, in which groups of control words (MCi) destined for the various units (UXi) are generated in succession on the basis of a program code stored in a program memory (MP1, MP2), characterized in that a first segment at least of the program code is stored in a first segment (MP1) of the program memory, comprising a succession of program words (MM) including first base words (MMA) each having a size less than the sum of the respective sizes of the control words (MCi), and second base words (MMB) fewer in number than that of the first base words, in that the various program words are extracted sequentially from this first segment of the program memory, a storage facility (RG) is provided whose content is updated at least on the basis of each second extracted base word, and certain at least of the various groups of control words are computed (MEB) sequentially on the basis of the combining according to at least one predetermined logic relation, of the first extracted base words and of the content of the storage facility (RG).

2. Process according to Claim 1, characterized in that each first base word (MMA) of the program code comprises a block of first instruction words (SMi) which are mutually independent and respectively assigned to the plurality of execution units, whilst each second base word (MMB) represents a second instruction word assigned to at least one execution unit, in that the storage facility is subdivided into a plurality of elementary storage facilities (RGi) assigned respectively to the plurality of execution units, and whose respective contents are respectively updated at least on the basis of the second corresponding instruction words and in that, according to a second logic relation assigned specifically to each execution unit, certain at least of the control words assigned to this execution unit are computed sequentially (MEBi) on the basis of the first corresponding instruction words and of the content of the elementary storage facility (RGi) assigned to this execution unit (UXi).

3. Process according to Claim 2, characterized in that in the presence of a program word different from a block of first instruction words, the control words are computed on the basis of the combining, according to the said second predetermined logic relations, of a first additional instruction word (NOP) with pre-established content and of the contents of the elementary storage facilities.

4. Process according to one of Claims 2 or 3, characterized in that there is provided in the program memory a second segment (MP2) containing second additional instruction words assigned to at least one execution unit, and in that in the presence of certain at least of the program words different from a second instruction word, from the second segment of the program memory is extracted a second additional instruction word on the basis of which the content of the corresponding elementary storage facility is updated.

5. Process according to Claim 1, characterized in that on the basis of the combining according to a first predetermined logic relation, of each first extracted base word or of a first pre-established additional base word, and of the content of the storage facility, there is computed a program sub-word (MMA, MMB) including a block of first instruction words which are mutually independent and respectively assigned to the plurality of execution units, and/or at least one second instruction word assigned to at least one execution unit, in that there is furthermore provided a plurality of elementary storage facilities (RGi) assigned respectively to the plurality of execution units, and whose respective contents are respectively updated at least on the basis of the second corresponding instruction words and in that, according to a second logic relation assigned specifically to each execution unit, certain at least of the control words assigned to this execution unit are computed sequentially on the basis of the first corresponding instruction words and of the content of the elementary storage facility assigned to this execution unit.

6. Process according to Claim 5, characterized in that the first and second instruction words are computed sequentially.

7. Process according to Claim 5 or 6, characterized in that in the presence of an extracted program word different from a first base word, the program sub-word is computed on the basis of the combining according to the said predetermined logic relation, of a first additional base word with pre-established content and of the content of the storage facility.

8. Process according to one of Claims 5 to 7, characterized in that in the program memory there is provided at least one third segment (MP3) containing third additional base words, and in that in the presence of a program word extracted from the first segment of the program memory and different from a second base word, a third additional base word, on the basis of which the content of the storage facility is updated, is possibly extracted from the third segment of the program memory.

9. Process according to one of Claims 5 to 8, characterized in that at least a segment of the content of one at least of the second base words extracted from the program memory is modified and the content of the storage facility is updated on the basis of the second modified base word.

10. Process according to one of Claims 5 to 9, characterized in that in the presence of a program sub-word different from a block of first instruction words, the control words are computed on the basis of the combining, according to the said second predetermined logic relations, of a first additional instruction word with pre-established content and of the contents of the elementary storage facilities.

11. Process according to one of Claims 5 to 10, characterized in that in the program memory there is provided a second segment (MP2) containing second additional instruction words assigned to at least one execution unit, and in that in the presence of a program sub-word different from a second instruction word, a second additional instruction word, on the basis of which the content of the corresponding elementary storage facility is updated, is possibly extracted from the second segment of the program memory.

12. Process according to one of Claims 2 to 11, characterized in that at least a segment of the content of one at least of the second instruction words or of one at least of the second additional instruction words is modified before updating the content of the corresponding elementary storage facility or facilities.

13. Device for the simultaneous command of the control statuses of a plurality of execution units of a programmable processor, comprising a program memory and command facilities, connected between the program memory, and the execution units, and able to generate in succession groups of control words destined for the various units on the basis of a program code contained in the program memory, characterized in that the program memory comprises a first segment (MP1) containing a succession of program words including first base words (MMA) each having a size less than the sum of the respective sizes of the control words, and second base words (MMB) fewer in number than that of the first base words, in that the command facilities include facilities for extracting the various program words sequentially from the first segment of the program memory, a storage facility (RG) connected to the output of the program memory, facilities (MXM) for updating the content of the storage facility at least on the basis of each second extracted base word, and computational facilities (MEB) able to compute sequentially certain at least of the various groups of control words, on the basis of the combining according to at least one predetermined logic relation, of the content of the storage facility and of a first extracted base word.

14. Device according to Claim 13, characterized in that each first base word includes a block of first instruction words which are mutually independent and respectively assigned to the plurality of execution units, whilst each second base word represents a second instruction word assigned to at least one of the execution units, in that the storage facility includes a plurality of elementary storage facilities (RGi), connected to the output of the program memory, and respectively assigned to the various execution units whilst the updating facilities include a plurality of elementary updating facilities (MXMi) able to respectively update the contents of the elementary storage facilities on the basis of the corresponding second instruction words, and in that the computational facilities include a plurality of elementary computational facilities (MEBi) each computing sequentially the various successive control words of an execution unit, on the basis of the combining according to a second predetermined logic relation specific to the said unit, of the first corresponding instruction words and of the content of the elementary storage facility assigned to the said unit.

15. Device according to Claim 14, characterized in that each program word includes an identifier (Id) allowing its identification as either a first instruction word or as a second instruction word, as well as a useful segment, and in that the command facilities include selection facilities (MX1, MX2), controlled by the identifier of each program word, and including a first input for receiving the program words, a first output connected to the elementary computational facilities, and a second output connected to the elementary updating facilities.

16. Device according to Claim 15, characterized in that the program memory includes a second segment (MP2) containing second additional instruction words, and in that the selection facilities (MX2) include another input connected to the output of the second segment of the program memory.

17. Device according to Claim 13, characterized in that the computational facilities sequentially compute program sub-words each including a block of first instruction words which are mutually independent and respectively assigned to the plurality of execution units, and/or at least one second instruction word assigned to at least one execution unit, and in that the command facilities furthermore include a plurality of elementary storage facilities (RGi), connected to the output of the computational facilities, and respectively assigned to the various execution units, as well as a plurality of elementary updating facilities able to respectively update the contents of the elementary storage facilities on the basis of the second corresponding instruction words, and in that the command facilities furthermore include a plurality of elementary computational facilities each computing sequentially the various successive control words of an execution unit, on the basis of the combining according to a predetermined logic relation specific to the said unit, of the first corresponding instruction words and of the content of the elementary storage facility assigned to the said unit.

18. Device according to Claim 17, characterized in that each program word includes an identifier (Id) allowing its identification as either a first base word or as a second base word, as well as a useful segment, and in that the command facilities include selection facilities (MX1S, MX2S), controlled by the identifier of each program word, including a first input for receiving the program words and including a first output connected to the computational facilities, and a second output connected to the updating facilities.

19. Device according to Claim 18, characterized in that the program memory includes a third segment (MP3) containing second additional base words, and in that the upstream selection facilities include another input connected to the output of the third segment of the program memory.

20. Device according to one of Claims 17 to 19, characterized in that each program sub-word includes an identifier allowing its identification as either a first instruction word or as a second instruction word, as well as a useful segment, and in that the command facilities include selection facilities, controlled by the identifier of each program sub-word, including a first input for receiving program sub-words, a first output connected to the elementary computational facilities, and a second output connected to the elementary updating facilities.

21. Device according to Claim 20, characterized in that the program memory includes a second segment containing second additional instruction words, and in that the selection facilities include another input connected to the output of the second segment of the program memory.

22. Device according to one of Claims 14 to 21, characterized in that certain second instruction words or certain second additional instruction words include a designation area (DS) for one or more units to which they are assigned, a status area (ZE), and a useful segment (PU), in that the elementary storage facility corresponding to the said designation area includes several elementary sub-storage facilities corresponding to the various possible values of the status area, and in that the elementary updating facilities include updating sub-facilities (MXMij) able to update the content of the elementary sub-storage facility designated by the status area on the basis of the useful segment of this second instruction word or of this second additional instruction word.

23. Device according to one of Claims 14 to 22, characterized in that one at least (MC1) of the control words of each group includes a first segment (PA) containing several bits emanating directly from the bits contained in an elementary storage facility and a second segment (PB) whose bits result from a combining of the content of this elementary storage facility and of a first instruction word, in that the execution unit controlled by this control word includes execution subunits (UX11-UX1w) controlled by control sub-words each including a different bit al-aw of the first segment (PB) of the control word as well as the bits of the second segment of the control word.

## Patentansprüche

1. Verfahren zur simultanen Steuerung der Steuerzustände einer Vielzahl von Verarbeitungseinheiten eines programmierbaren Prozessors, bei dem aufeinanderfolgend Gruppen von für unterschiedliche Einheiten (UXi) bestimmte Steuerworte (MCi) ausgehend von einem in einem Programmspeicher (MP1, MP2) gespeicherten Programmcode generiert werden,
**dadurch gekennzeichnet, dass**
zumindest ein erster Teil des Programmcodes in einem ersten Teil (MP1) des Programmspeichers gespeichert wird, der eine Folge von Programmworten (MM) umfasst, die erste Grundwörter (MMA) enthält, von denen jedes eine Größe hat, die kleiner als die Summe der jeweiligen Größen der Steuerwörter (MCi) ist, und zweite Grundwörter (MMB) in einer Anzahl umfasst, die kleiner als jene der ersten Grundwörter ist, dass aus diesem ersten Teil des Programmspeichers die unterschiedlichen Programmworte sequentiell extrahiert werden, dass ein Speichermittel (5G) bereitgestellt wird, dessen Inhalt zumindest ausgehend von jedem extrahierten zweiten Grundwort aktualisiert wird, und dass sequentiell zumindest gewisse der unterschiedlichen Gruppen von Steuerwörtern ausgehend von der Kombination gemäß zumindest einer vorbestimmten logischen Beziehung zwischen den extrahierten ersten Grundwörtern und dem Inhalt des Speichermittels (RG) erstellt (MEB) wird.

2. Verfahren nach Anspruch 1,
**dadurch gekennzeichnet, dass**
jedes erste Grundwort (MMA) des Programmcodes einen Block erster Befehlswörter (SMi) umfasst, die voneinander unabhängig sind und jeweils einer Vielzahl von Verarbeitungseinheiten zugeordnet sind, während jedes zweite Grundwort (MMB) ein zweites Befehlswort darstellt, das zumindest einer Verarbeitungseinheit zugeordnet ist, dass das Speichermittel in eine Vielzahl von Elementar-Speichermitteln (RGi) unterteilt wird, die jeweils einer Vielzahl von Verarbeitungseinheiten zugeordnet sind, und deren jeweilige Inhalte jeweils ausgehend von zumindest den entsprechenden zweiten Befehlswörtern aktualisiert werden, und dass gemäß einer zweiten logischen Beziehung, die speziell einer jeden Verarbeitungseinheit zugeordnet ist, zumindest gewisse der Steuerwörter, die dieser Verarbeitungseinheit zugeordnet sind, ausgehend von den entsprechenden ersten Befehlswörtern und dem Inhalt des Elementar-Speichermittels (RGi), das dieser Verarbeitungseinheit (UXi) zugeordnet ist, sequentiell erstellt (MEBi) werden.

3. Verfahren nach Anspruch 2,
**dadurch gekennzeichnet, dass**
beim Vorhandensein eines von einem Block erster Befehlswörter unterschiedlichen Programmworts die Steuerwörter ausgehend von der Kombination gemäß den zweiten vorbestimmten logischen Beziehungen zwischen einem ersten Zusatz-Befehlswort (NOP) vorbestimmten Inhalts und den Inhalten der Elementar-Speichermittel erstellt werden.

4. Verfahren nach Anspruch 2 oder 3,
**dadurch gekennzeichnet, dass**
in dem Programmspeicher ein zweiter Teil (MP2) bereitgestellt ist, der zweite Zusatz-Befehlswörter enthält, die zumindest einer Verarbeitungseinheit zugeordnet sind, und dass beim Vorliegen von zumindest gewissen der Programmwörtern, die von einem zweiten Befehlswort unterschiedlich sind, ein zweites Zusatz-Befehlswort aus dem zweiten Teil des Programmspeichers extrahiert wird, wobei ausgehend von diesem der Inhalt des entsprechenden Elementar-Speichermittels aktualisiert wird.

5. Verfahren nach Anspruch 1,
**dadurch gekennzeichnet, dass**
ausgehend von der Kombination gemäß einer vorbestimmten logischen Beziehung aus jedem extrahierten ersten Grundwort oder einem voreingestellten ersten Zusatz-Grundwort und dem Inhalt des Speichermittels ein Programm-Unterwort (MMA, MMB) erstellt wird, welches einen Block erster Befehlswörter aufweist, die voneinander unabhängig sind und jeweils einer Vielzahl von Verarbeitungseinheiten zugeordnet sind, und/oder zumindest ein zweites Befehlswort erstellt wird, welches zumindest einer Verarbeitungseinheit zugeordnet ist, dass überdies eine Vielzahl von Elementar-Speichermitteln (RGi) bereitgestellt wird, die jeweils einer Vielzahl von Verarbeitungseinheiten zugeordnet sind, und deren jeweilige Inhalte jeweils ausgehend von zumindest den zweiten entsprechenden Befehlsworten aktualisiert werden, und dass gemäß einer zweiten logischen Beziehung, die speziell jeder Verarbeitungseinheit zugeordnet ist, zumindest gewisse der dieser Verarbeitungseinheit zugeordneten Steuerwörter sequentiell ausgehend von den entsprechenden ersten Befehlswörtern und dem Inhalt des dieser Verarbeitungseinheit zugeordneten Elementar-Speichermittels erstellt werden.

6. Verfahren nach Anspruch 5,
**dadurch gekennzeichnet, dass**
die ersten und zweiten Befehlswörter sequentiell erstellt werden.

7. Verfahren nach Anspruch 5 oder 6,
**dadurch gekennzeichnet, dass**
beim Vorliegen eines von einem ersten Grundwort unterschiedlichen extrahierten Programmwortes das Programm-Unterwort ausgehend von der Kombination gemäß der vorbestimmten logischen Beziehung aus einem ersten Zusatz-Grundwort vordefinierten Inhaltes und dem Inhalt des Speichermittels erstellt wird.

8. Verfahren nach einem der Ansprüche 5 bis 7,
**dadurch gekennzeichnet, dass**
in dem Programmspeicher zumindest ein dritter Teil (MP3) bereitgestellt wird, der dritte Zusatz-Grundwörter enthält, und dass beim Vorliegen eines Programmwortes, welches aus dem ersten Teil des Programmspeichers extrahiert wurde und von einem zweiten Grundwort unterschiedlich ist, gegebenenfalls aus dem dritten Teil des Programmspeichers ein drittes Zusatz-Grundwort extrahiert wird, von dem ausgehend der Inhalt des Speichermittels aktualisiert wird.

9. Verfahren nach einem der Ansprüche 5 bis 8,
**dadurch gekennzeichnet, dass**
zumindest ein Teil des aus dem Programmspeicher extrahierten Inhalts von zumindest einem der zweiten Grundwörter modifiziert wird und der Inhalt des Speichermittels ausgehend von dem modifizierten zweiten Grundwort aktualisiert wird.

10. Verfahren nach einem der Ansprüche 5 bis 9,
**dadurch gekennzeichnet, dass**
beim Vorliegen eines von einem Block erster Befehlswörter unterschiedlichen Programm-Unterworts die Steuerwörter ausgehend von der Kombination gemäß den zweiten vorbestimmten logischen Beziehungen zwischen einem ersten Zusatz-Befehlswort mit voreingestelltem Inhalt und den Inhalten der Elementar-Speichermitteln erstellt werden.

11. Verfahren gemäß einem der Ansprüche 5 bis 10,
**dadurch gekennzeichnet, dass**
in dem Programmspeicher ein zweiter Teil (MP2) bereitgestellt wird, der zweite Zusatz-Befehlswörter enthält, die zumindest einer Verarbeitungseinheit zugeordnet sind, und dass beim Vorliegen eines von einem zweiten Befehlswort unterschiedlichen Programm-Unterwortes gegebenenfalls aus dem zweiten Teil des Programmspeichers ein zweites Zusatz-Befehlswort extrahiert wird, von dem ausgehend der Inhalt des entsprechenden Elementar-Speichermittels aktualisiert wird.

12. Verfahren nach einem der Ansprüche 2 bis 11,
**dadurch gekennzeichnet, dass**
zumindest ein Teil des Inhalts von zumindest einem der zweiten Befehlsworte oder von zumindest einem der zweiten Zusatz-Befehlsworte modifiziert wird, bevor der Inhalt des oder der entsprechenden Elementar-Speichermittel(s) aktualisiert wird.

13. Vorrichtung zur simultanen Steuerung der Steuerzustände einer Vielzahl von Verarbeitungseinheiten eines programmierbaren Prozessors, mit einem Programmspeicher und Steuermitteln, die zwischen dem Programmspeicher und den Verarbeitungseinheiten angeschlossen sind und angepasst sind, um ausgehend von einem in dem Programmspeicher enthaltenen Programmcode aufeinanderfolgend Gruppen von Steuerwörtern zu generieren, die für unterschiedliche Einheiten bestimmt sind,
**dadurch gekennzeichnet, dass**
der Programmspeicher einen ersten Teil (MP1) umfasst, der eine Folge von Programmwörtern enthält, die erste Grundwörter (MMA) umfassen, von denen jedes eine Größe hat, die kleiner als die Summe der jeweiligen Größen der Steuerwörter ist, und zweite Grundwörter (MMB) in einer Anzahl umfasst, die kleiner äls die der ersten Grundwörter ist, dass die Steuermittel Mittel aufweisen, um sequentiell aus dem ersten Teil des Programmspeichers die unterschiedlichen Programmwörter zu extrahieren, ein Speichermittel (RG) aufweisen, das mit dem Ausgang des Programmspeichers verbunden ist, Mittel (MXM) zur Aktualisierung des Inhalts des Speichermittels zumindest ausgehend von jedem extrahierten zweiten Grundwort aufweisen, und Mittel zur Erstellung (MEB) aufweisen, die angepasst sind, um sequentiell zumindest gewisse der unterschiedlichen Gruppen von Steuerwörtern ausgehend von der Kombination gemäß zumindest einer vorbestimmten logischen Beziehung zwischen dem Inhalt des Speichermittels und einem extrahierten ersten Grundwort zu erstellen.

14. Vorrichtung nach Anspruch 13,
**dadurch gekennzeichnet, dass**
jedes erste Grundwort einen Block erster Befehlswörter aufweist, die voneinander unabhängig sind und jeweils einer Vielzahl von Verarbeitungseinheiten zugeordnet sind, während jedes zweite Grundwort ein zweites Befehlswort darstellt, das zumindest einer der Verarbeitungseinheiten zugeordnet ist, dass das Speichermittel eine Vielzahl von Elementar-Speichermitteln (RGi) aufweist, die an den Ausgang des Programmspeichers angeschlossen sind und jeweils unterschiedlichen Verarbeitungseinheiten zugeordnet sind, während die Einrichtungen zur Aktualisierung eine Vielzahl von Elementar-Aktualisierungsmitteln (MXMi) aufweisen, die angepasst sind, um jeweils die Inhalte der Elementar-Speichermittel ausgehend von den entsprechenden zweiten Befehlswörtern zu aktualisieren, und dass die Erstellungseinrichtungen eine Vielzahl von Elementar-Erstellungseinrichtungen (MEBi) aufweisen, die jede sequentiell die aufeinanderfolgenden unterschiedlichen Steuerwörter einer Verarbeitungseinheit ausgehend von der Kombination gemäß einer für die Einheit spezifischen vorbestimmten zweiten logischen Beziehung zwischen den ersten entsprechenden Befehlswörtern und dem Inhalt des der Einheit zugeordneten Elementar-Speichermittels erstellen.

15. Vorrichtung nach Anspruch 14,
**dadurch gekennzeichnet, dass**
jedes Programmwort eine Kennung (Id) aufweist, die dessen Identifizierung als erstes Befehlswort oder als zweites Befehlswort erlaubt, sowie einen Nutzabschnitt aufweist, und dass die Steuermittel Auswahlmittel (MX1, MX2) aufweisen, die durch die Kennung jedes Programmwortes gesteuert sind und einen ersten Eingang zum Empfangen der Programmwörter, einen ersten Ausgang, der mit Elementar-Erstellungsmitteln verbunden ist und einen zweiten Ausgang, der mit Elementar-Aktualisierungsmitteln verbunden ist, aufweisen.

16. Vorrichtung nach Anspruch 15,
**dadurch gekennzeichnet, dass**
der Programmspeicher einen zweiten Teil (MP2) aufweist, der zweite Zusatz-Befehlswörter enthält, und dass die Auswahlmittel (MX2) einen weiteren Eingang aufweisen, der an den Ausgang des zweiten Teils des Programmspeichers angeschlossen ist.

17. Vorrichtung nach Anspruch 13,
**dadurch gekennzeichnet, dass**
die Erstellungsmittel sequentiell Programm-Unterworte erstellen, die jedes einen Block erster Befehlsworte aufweisen, die voneinander unabhängig sind und jeweils einer Vielzahl von Verarbeitungseinheiten zugeordnet sind, und/oder zumindest ein zweites Befehlswort aufweist, das zumindest einer Verarbeitungseinheit zugeordnet ist, und dass die Steuermittel überdies eine Vielzahl von Elementar-Speichermitteln (RGi) aufweisen, die an den Ausgang der Erstellungsmittel angeschlossen sind und jeweils unterschiedlichen Verarbeitungseinheiten zugeordnet sind, sowie eine Vielzahl von Elementar-Aktualisierungsmitteln aufweisen, die angepasst sind, um jeweils die Inhalte der Elementar-Speichermittel ausgehend von den entsprechenden zweiten Befehlswörtern zu aktualisieren, und dass die Steuermittel überdies eine Vielzahl von Elementar-Erstellungseinrichtungen aufweisen, von denen jede sequentiell die aufeinanderfolgenden unterschiedlichen Steuerwörter einer Verarbeitungseinheit ausgehend von der Kombination gemäß einer für die Einheit spezifischen vorbestimmten logischen Beziehung zwischen den entsprechenden ersten Befehlswörtern und dem Inhalt des der Einheit zugeordneten Elementar-Speichermittels erstellt.

18. Vorrichtung nach Anspruch 17,
**dadurch gekennzeichnet, dass**
jedes Programmwort eine Kennung (Id) aufweist, die dessen Identifizierung als erstes Grundwort oder als zweites Grundwort erlaubt, sowie einen Nutzabschnitt aufweist, und dass die Steuermittel eingangsseitig Auswahlmittel (MX1S, MX2S) aufweisen, die durch die Kennung von jedem Programmwort gesteuert sind, welche einen ersten Eingang zum Empfangen der Programmwörter aufweisen und einen mit den Erstellungsmitteln verbundenen ersten Ausgang aufweisen, sowie einen mit den Aktualisierungsmitteln verbundenen zweiten Ausgang aufweisen.

19. Vorrichtung nach Anspruch 18,
**dadurch gekennzeichnet, dass** der Programmspeicher einen dritten Teil (MP3) aufweist, der zweite Zusatz-Grundwörter enthält, und dass die eingangsseitigen Auswahlmittel einen anderen Eingang aufweisen, der mit dem Ausgang des dritten Teils des Programmspeichers verbunden ist.

20. Vorrichtung nach einem der Ansprüche 17 bis 19, **dadurch**
**gekennzeichnet, dass**
jedes Programm-Unterwort eine Kennung aufweist, die dessen Identifizierung als erstes Befehlswort oder als zweites Befehlswort ermöglicht, sowie einen Nutzabschnitt aufweist, und dass die Steuermittel Auswahlmittel aufweisen, die durch die Kennung jedes Programm-Unterwortes gesteuert sind, die einen ersten Eingang zum Aufnehmen von Programm-Unterwörtern, einen mit Elementar-Erstellungsmitteln verbundenen ersten Ausgang und einen mit Elementar-Aktualisierungsmitteln verbundenen zweiten Ausgang aufweisen.

21. Vorrichtung nach Anspruch 20,
**dadurch gekennzeichnet, dass**
der Programmspeicher einen zweiten Teil aufweist, der zweite Zusatz-Befehlswörter enthält, und dass die Auswahlmittel einen weiteren Eingang aufweisen, der mit dem Ausgang des zweiten Teils des Programmspeichers verbunden ist.

22. Vorrichtung nach einem der Ansprüche 14 bis 21, **dadurch**
**gekennzeichnet, dass**
gewisse zweite Befehlswörter oder gewisse Zusatz-Befehlswörter eine Bestimmungszone (DS) für eine oder die Einheiten aufweisen, denen sie zugeordnet sind, eine Zustandszone (ZE) und einen Nutzabschnitt (PU) aufweisen, dass das der Bestimmungszone entsprechende Elementar-Speichermittel mehrere Elementar-Unterspeichermittel aufweist, die möglichen unterschiedlichen Werten der Zustandszone entsprechen, und dass die Elementar-Aktualisierungsmittel Aktualisierungs-Untermittel (MXMij) aufweisen, die angepasst sind, um den Inhalt des durch die Zustandszone bestimmten Elementar-Unterspeichermittels ausgehend von dem Nutzabschnitt des zweiten Befehlswortes oder des zweiten Zusatz-Befehlswortes zu aktualisieren.

23. Vorrichtung nach einem der Ansprüche 14 bis 22,
**dadurch gekennzeichnet, dass**
zumindest eines (MC1) der Steuerwörter jeder Gruppe einen ersten Teil (PA) aufweist, der mehrere Bit enthält, die direkt von den Bits ausgegeben wurden, die in einem Elementar-Speichermittel enthalten sind, und einen zweiten Teil (PB) aufweist, dessen Bits sich aus einer Kombination des Inhalts dieses Elementar-Speichermittels und einem ersten Befehlswort ergeben, dass die durch dieses Steuerwort gesteuerte Verarbeitungseinheit Unter-Verarbeitungseinheiten (UX11-UX1w) aufweist, die durch Unter-Steuerworte gesteuert werden, von denen jedes ein unterschiedliches Bit (al-aw) des ersten Teils (PB) des Steuerwortes sowie die Bits des zweiten Teils des Steuerwortes aufweist.
